# EUROPÄISCHE PATENTSCHRIFT

(11) **EP 1 572 413 B1**
(45) Veröffentlichungstag und Bekanntmachung des Hinweises auf die Patenterteilung: **31.05.2006**
(21) Anmeldenummer: 03767460.3
(22) Anmeldetag: 26.11.2003
(51) Int. Cl.: B23K 20/12

(54) **REIBSCHWEISSVORRICHTUNG**
FRICTION WELDING DEVICE
DISPOSITIF DE SOUDAGE PAR FRICTION

(30) Priorität: 21.12.2002 DE 10260465
(43) Veröffentlichungstag der Anmeldung: 14.09.2005
(73) Patentinhaber: MTU Aero Engines GmbH, 80995 München (DE)
(72) Erfinder: BAYER, Erwin, 85221 Dachau (DE); GROHMANN, Boris, 82024 Taufkirchen (DE); HERMLE, Frank, 81673 München (DE); JÄNKER, Peter, 85521 Riemerling (DE)
(86) Internationale Anmeldenummer: PCT/DE2003/003920
(87) Internationale Veröffentlichungsnummer: WO 2004/058443

(56) Entgegenhaltungen:
- EP-A- 0 290 134
- EP-A- 0 513 669
- EP-A- 0 718 069

## Beschreibung

Die Erfindung betrifft eine Reibschweißvorrichtung für das stoffschlüssige Verbinden von Bauteilen, gemäß dem Oberbegriff des Patentanspruchs 1.

Reibschweißvorrichtungen sind in sehr unterschiedlichen Ausführungen bekannt. Ein Unterscheidungskriterium ist das zur Anwendung kommende, kinematische Prinzip. Im vorliegenden Fall geht es um Vorrichtungen, bei denen von zwei zu verbindenden Bauteilen eines statisch gehalten, das andere oszillierend, d.h. periodisch hin und her, bewegt und dabei gegen das statische Bauteil gedrückt wird. Die periodische Bewegung verläuft parallel zu den vorgesehenen Schweißflächen und wird von einem sogenannten Oszillator erzeugt. Das Anpressen erfolgt senkrecht zu den Schweißflächen mittels einer geeigneten Stauchvorrichtung. Wegen der hohen Anpress- und Reibungskräfte wird das bewegte, in der Regel kleinere Bauteil in einer stabilen Kassette gehalten, welche meist nur die Schweißzone freilässt. Die oszillierende Bewegung kann auf gerade und/oder gekrümmter Bahn erfolgen, z.B. auf einem Teil eines Kreisbogens. Bei der geradlinigen Variante wird häufig die Bezeichnung "lineares Reibschweißen", abgekürzt "LRS", verwendet. Im Hinblick auf die hohen dynamischen Belastungen müssen alle Elemente einer Reibschweißvorrichtung besonders robust, formstabil und spielfrei ausgeführt sein, was insbesondere beim Reibschweißen größerer Bauteile aus hochfesten Metallen gilt. Wichtig sind weiterhin präzise, reproduzierbare und variierbare Reib- und Stauchbewegungen mit hoher Positioniergenauigkeit am Ende des dynamischen Reibvorganges. All diese Kriterien haben über Jahre der Entwicklung dazu geführt, dass sich mechanische und hydraulische Varianten sowie Kombinationen aus beiden zur unmittelbaren Erzeugung der benötigten Kräfte und Bewegungen durchgesetzt haben. Es versteht sich, dass die entsprechenden Antriebe auch Elektromotoren, elektronische Steuerungen und Regelungen, d.h. elektrische und elektronische Elemente umfassen.

Die europäische Patentschrift 0 513 669 B1 schützt ein Reibschweißverfahren zur Beschaufelung eines Schaufelträgers für Strömungsmaschinen einschließlich der benötigten Vorrichtung bzw. Vorrichtungselemente. Die reale Ausführung dieser Reibschweißvorrichtung arbeitet mit einem elektromotorisch angetriebenen, mechanischen Oszillator nach einem Exzenterprinzip sowie mit einer elektrohydraulisch druckbeaufschlagten, hydraulischen Stauchvorrichtung.

Bei mechanischen Oszillatoren ist die maximale Bewegungsfrequenz auf Werte unter 100 Hertz (Hz) begrenzt. Bei hydraulischen Oszillatoren liegt die maximale Frequenz über 100Hz aber noch unter 150 Hz. Nach der Gleichung Leistung - Kraft x Geschwindigkeit ist die Reibleistung proportional zur Reibkraft, zur Bewegungsamplitude und zur Bewegungsfrequenz. Die Reibkraft ergibt sich aus der Normalkraft und dem Reibwert. Bei vorgegebener Amplitude, vorgegebener Frequenz (siehe obige Maximalwerte) und vorgegebenem Reibwert lässt sich die Reibleistung nur über die Normalkraft/Anpresskraft erhöhen bzw. beeinflussen. Bei vorgegebener Reibleistung führen die relativ niedrigen Frequenzen der mechanischen und hydraulischen Oszillatoren zu entsprechend hohen Anpresskräften, die von der Stauchvorrichtung aufzubringen sind. Hohe Kräfte erfordern mechanisch besonders stabile und massive, d.h. schwere Komponenten für die Reibschweißvorrichtung.

Angesichts der bekannten Lösungen und ihrer Nachteile besteht die Aufgabe der Erfindung darin, eine Reibschweißvorrichtung für das stoffschlüssige Verbinden von Bauteilen mit periodischer Bewegung eines Bauteils bereitzustellen, die durch genauere und besser reproduzierbare Funktion zu geometrisch exakteren Integralbauteilen führt und die durch höhere Bewegungsfrequenzen und geringere Reibkräfte die Fertigung filigranerer Konstruktionen ermöglicht, wobei im Schweißbereich leichtere und kleinere, platzsparendere Vorrichtungselemente verwendbar sind.

Diese Aufgabe wird durch die in Patentanspruch 1 gekennzeichneten Merkmale gelöst, in Verbindung mit den gattungsbildenen Merkmalen in dessen Oberbegriff. Erfindungsgemäß umfasst der Oszillator zwei oder eine höhere gerade Anzahl an Piezoaktuatoren, die paarweise zumindest annähernd auf einer Wirkungslinie liegen. Die Piezoaktuatoren üben von gegenüberliegenden Seiten Druckkräfte auf die Kassette mit dem bewegten Bauteil aus, so dass eine definierte Vorspannung realisierbar ist, und die periodische Reibbewegung praktisch spielfrei abläuft. Über die elektrische Spannungssteuerung/-regelung der Piezoaktuatoren mit der Möglichkeit, jeden einzelnen Aktuator individuell zu beaufschlagen, lassen sich die mechanische Vorspannung der Kassette, die Bewegungsfrequenz , die Bewegungsamplitude und die Nullpunktslage der Bewegung einschließlich der Endposition am Ende des Schweißvorganges sehr genau und reproduzierbar wählen. Die Erfordernis aufwendiger Nacharbeit zum Ausgleich geometrischer Ungenauigkeiten der verschweißten Einheit, z.B. durch NC-Fräsen, wird dadurch stark reduziert bzw. eliminiert. Infolge der reduzierten Reibkräfte, einer kleineren und leichteren Kassette etc., lassen sich auch filigrane, mechanisch empfindliche Blisks (Bladed Disks) mit eng stehenden Schaufeln durch Reibschweißen fertigen und instandsetzen. Dabei können die Naben/Scheiben der Rotoren optimal an die Betriebslasten angepasst und weitgehend fertigbearbeitet sein und müssen nicht mehr im Hinblick auf die Reibschweißlasten überdimensioniert bzw. mit erheblichem, später zu entfernenden Aufmaß versehen werden.

In den Unteransprüchen sind bevorzugte Ausgestaltungen der Reibschweißvorrichtung gemäß Hauptanspruch gekennzeichnet.

Die Erfindung wird anschließend anhand der Figuren noch näher erläutert. Dabei zeigen in stark vereinfachter, nicht maßstäblicher Darstellung:
- Figur 1: eine axiale Teilansicht eines Schaufelträgers mit einer daran zu befestigenden Schaufel
- Figur 2: die Teilansicht gemäß Figur 1 ergänzt um eine Reibschweißvorrichtung,
- Figur 3: eine radiale Teilansicht des Schaufelträgers, der Schaufel und der Reibschweißvorrichtung gemäß Figur 2,
- Figur 4: eine tangentiale Teilansicht eines Schaufelträgers, einer Schaufel und einer Reibschweißvorrichtung mit vier Piezoaktuatorpaaren,
- Figur 5: eine Teilansicht eines Piezoaktuators mit einer Blattfederanordnung und
- Figur 6: eine Anordnung von Piezoelementen

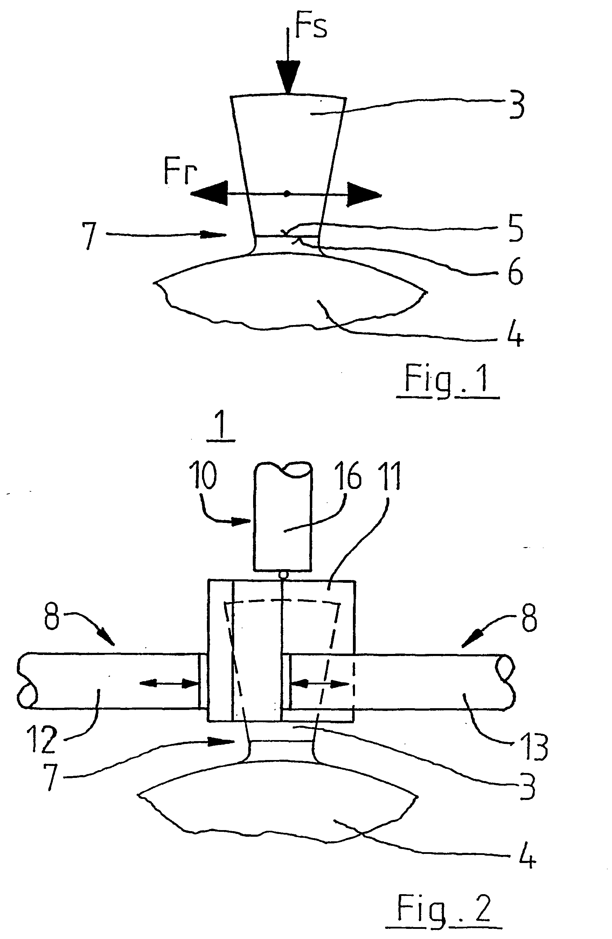

Figur 1 zeigt in axialer Ansicht einen Teil eines für einen Rotor einer Turbomaschine vorgesehenen Schaufelträgers 4, an dem eine Schaufel 3 durch Reibschweißen befestigt werden soll. Die oszillierende Reibbewegung soll hier quer zur Längsmittelachse des Schaufelträgers 4 erfolgen, was durch einen horizontalen Doppelpfeil für die Reibkraft Fr. symbolisiert ist. Dabei wird nur die Schaufel 3 bewegt, der Schaufelträger 4 wird statisch gehalten. Die Schweißflächen 5, 6 werden von einer senkrecht zu diesen gerichteten Stauchkraft Fs aufeinandergepresst, wobei die Stauchkraft Fs über die bewegte Schaufel 3 in die Schweißzone 7 geleitet wird. Der von oben auf die Schaufelspitze weisende Kraftpfeil hat keine Bedeutung für die tatsächliche Art der Krafteinleitung in die Schaufel 3. Zu bevorzugen ist sicher eine Krafteinleitung mit einer möglichst gleichmäßigen Belastung eines Großteils der Schaufeloberfläche durch Reib- bzw. Formschluss.

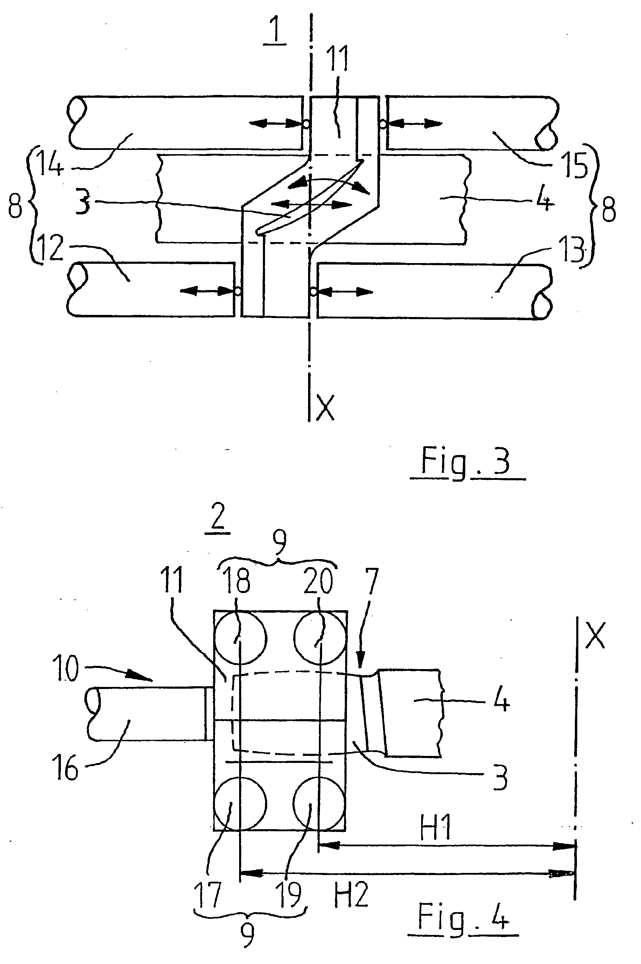

Figur 2 zeigt zusätzlich zu den reibzuschweißenden Bauteilen 3, 4 eine erfindungsgemäße Reibschweißvorrichtung 1, wobei zum besseren Verständnis auch die Figur 3 heranzuziehen ist. Die Schaufel 3 ist zur Übertragung der beachtlichen Kräfte weitgehend vollständig von einer mechanisch stabilen Kassette 11, vorzugsweise aus Stahl oder Hartmetall, umschlossen, deren Innenkontur bestmöglich an die Schaufelkontur angepasst ist. Die Kassette 11 besteht aus zwei oder mehr, miteinander verschraubten Teilen mit der Schaufelgeometrie angepassten Trennfugen. Neben der Kassette 11 sind der eine definierte, periodische Reibbewegung parallel zu den Schweißflächen 5, 6 erzeugende Oszillator 8 und die eine definierte Stauchkraft und Zustellbewegung erzeugende Stauchvorrichtung 10 wesentlich Elemente der Reibschweißvorrichtung 1. Im vorliegenden Beispiel arbeiten sowohl der Oszillator 8 als auch die Stauchvorrichtung 10 nach dem piezoelektrischen Prinzip, d.h. mit durch elektrische Gleichspannung bewirkter Längenänderung von Piezoelementen. In Figur 1 sind zwei horizontale, auf einer Wirkungslinie liegende, von links und rechts an der Kassette 11 angreifende Piezoaktuatoren 12, 13 des Oszillators 8 sowie ein vertikal von oben an der Kassette 11 angreifender Piezoaktuator 16 der Stauchvorrichtung 10 zu erkennen. Die Kraftübertragungsstellen zwischen den Piezoaktuatoren und der Kassette 11 werden, je nach Relativbewegung, in der Regel einen oder mehrere Freiheitsgrade aufweisen, z.B. für translatorische Verschiebungen und/oder Schwenkbewegungen. Dabei können Gleit- und/oder Wälzlager zur Anwendung kommen. Im vorliegenden Fall kann beispielsweise ein Schwenkgelenk mit einem Freiheitsgrad zwischen dem Piezoaktuator 16 und der Kassette 11 angeordnet sein. Die Ausführung der Kraftübertragungsstellen liegt im Bereich des üblichen Fachwissens und ist kein unmittelbarer Gegenstand der Erfindung. Die eingezeichneten Doppelpfeile deuten die synchrone, gleichgerichtete Bewegung der Piezoaktuatoren 12 und 13 an.

Anhand von Figur 3 wird das Erfindungsprinzip noch deutlicher. In dieser radialen Teilansicht des Schaufelträgers 4 sowie der Schaufel 3 erkennt man das in der Kassette 11 eingeschlossene Schaufelprofil sowie die daran angepassten Trennfugen der Kassette 11. Die Längsmittelachse X des Schaufelträgers, d.h. seine spätere Rotationsachse, verläuft in dieser Ansicht vertikal. Es versteht sich, dass bei einer Neubeschaufelungen des Schaufelträgers 4 eine Vielzahl von nahe beieinanderstehenden Schaufeln 3 am Umfang zu befestigen ist, von denen hier der Übersichtlichkeit halber nur eine wiedergegeben ist. Daher muss die Kassette 11 so gestaltet sein, dass sie zwischen bereits vorhandenen Schaufeln Platz findet. Dies erklärt die vereinfacht dargestellte, gekröpfte Form der Kassette. Im vorliegenden Fall umfasst der Oszillator 8 vier Piezoaktuatoren 12 bis 15, welche paarweise auf einer Wirkungslinie liegen und quer zur Längsmittelachse X angeordnet sind. Es ist zu beachten, dass die Piezoaktuatoren - aufgrund der erforderlichen Schwingungsamplituden von mehreren Millimetern - Längen von mehreren Metern aufweisen können, wobei eine Vielzahl von Piezoelementen geometrisch in Reihe geschaltet, d.h. hintereinander angeordnet ist. Daher ist es günstig, die langen Piezoaktuatoren 12 bis 15 in der dargestellten Weise paarweise axial vorderhalb und hinterhalb des beschaufelten bzw. zu beschaufelnden Schaufelträgers 4 anzuordnen. Es sei angemerkt, dass die Reibschweißvorrichtung 1 sowohl für die Neuteilfertigung als auch für Reparaturzwecke (Instandsetzung), d.h. für den Ersatz einzelner oder weniger Schaufeln verwendbar ist. Die beiden vorderen Piezoaktuatoren 12, 13 werden synchron gesteuert in der Weise, dass sie immer unter Druckspannung an der Kassette 11 anliegen. Das gleiche gilt für die beiden hinteren Piezoaktuatoren 14 und 15. Es wird in aller Regel auch so sein, dass das vordere Aktuatorenpaar mit gleicher Frequenz wie das hintere Aktuatorenpaar betrieben wird. Bei Phasengleicheit und Amplitudengleichheit des vorderen und hinteren Aktuatorenpaares führt die Schaufel 3 eine geradlinige, oszillierende Bewegung aus. Es gibt aber weiter die Möglichkeiten, ein Aktuatorenpaar relativ zum anderen mit unterschiedlicher Amplitude und/oder mit Phasenverschiebung zu betreiben, dies bei gleicher Frequenz. Für die Schaufel 3 hat dies zur Folge, dass Kombinationen aus translatorischen Bewegungen und Schwenkbewegungen bzw. reine Schwenkbewegungen um variable Drehpunkte möglich sind. Siehe hierzu den geraden und den gekrümmten Doppelpfeil über der Schaufel 3. Dies setzt eine entsprechend gelenkige Anbindung der Piezoaktuatoren 12 bis 15 an die Kassette 11 voraus. Durch lokal unterschiedliche Bewegungsformen und unterschiedliche Amplituden kann die eingebrachte Reibarbeit über die Schweißflächen variiert werden, z.B. in dünnen Schaufelbereichen weniger Reibarbeit als in dicken, wodurch sich eine gleichmäßigere Temperaturverteilung und letztlich ein besseres Schweißergebnis erzielen lässt.

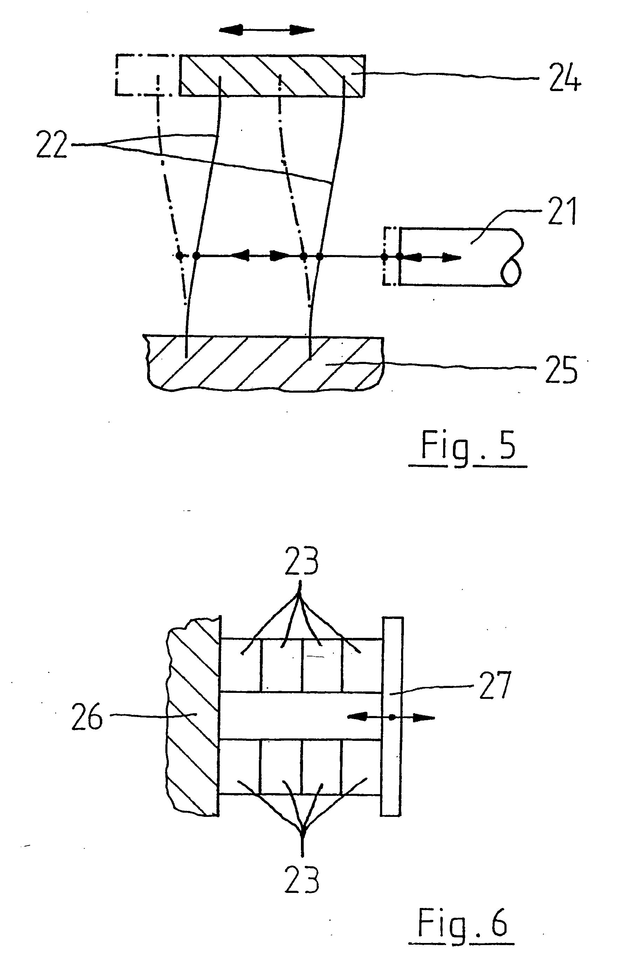

Figur 4 zeigt eine Teilansicht des Schaufelträgers 4 mit Schaufel 3 in Umfangsrichtung/Tangentialrichtung, wobei die Längsmittelachse X des Schaufelträgers 4 vertikal und rechts neben der eigentlichen Darstellung verläuft. Die hier verwendete Reibschweißvorrichtung 2 unterscheidet sich von der voranstehend beschriebenen Reibschweißvorrichtung 1 dadurch, dass ihr Oszillator 9 vier Paare von Piezoaktuatoren, das heißt acht Piezoaktuatoren umfasst, wobei die Darstellung nur die vier Piezoaktuatoren 17 bis 20 zeigt, welche in der Ansicht vorderhalb der Kassette 11 angeordnet sind. Die Wirkungsebene der Piezoaktuatoren 17, 18 liegt relativ zur Längsmittelachse X in einer größeren radialen Höhe H2 als die Wirkungsebene der Piezoaktuatoren 19, 20, welche in der radialen Höhe H 1 liegt. Bei Reibschweißversuchen hat sich gezeigt, dass Schaufeln trotz exakt radialer Ausrichtung in der Kassette nach dem Anschweißen eine leichte, ungewollte Neigung in Umfangsrichtung aufwiesen. Mit den gezeigten, höhenversetzten Aktuatorpaaren kann während des Schweißvorganges eine gezielte kleine, entgegengesetzte Neigung der Kassette 11 und der Schaufel 3 in Umfangsrichtung eingestellt werden, z.B. durch geometrische Nullpunktsverschiebung der höheren Aktuatorpaare relativ zu den niedrigeren Aktuatorpaaren, so dass am Ende des Schweißvorganges die gewünschte Schaufelorientierung exakt gegeben ist. Die Stauchvorrichtung 10 mit Piezoaktuator 16 kann wie in den vorhergehenden Figuren ausgeführt sein.

Die Bewegungsamplituden von Piezoaktuatoren liegen relativ zur Aktuatorlänge im Promillebereich. Um bei vorgegebenen Amplituden die Aktuatorlängen zu reduzieren, kann man die Aktuatoramplituden mechanisch vergrößern, wobei unterschiedliche Getriebemechanismen möglich sind. Figur 5 zeigt beispielhaft eine Blattfederanordnung 22 für diesen Zweck. Zwei öder mehr Blattfedern sind an einem Ende fest in-eine statische Basis 25 eingespannt. Die anderen Enden der Blattfedern sind in ein bewegliches Teil 24 eingebettet. Ein mit einem Piezoaktuator 21 verbundenes Zug-/Druckelement greift an den Blattfedern im Bereich zwischen der Basis 25 und dem Teil 24 an. Durch elastische Verformung der Blattfedern wird das Teil 24 mit größerer Amplitude und gleicher Frequenz in Relation zum Zug-/Druckelement bewegt. Durch Heranrücken des Zug-/Druckelementes an die Basis 25 lässt sich die Bewegungsamplitude des Teils 24 vergrößern, bei Reduzierung der vom Teil 24 ausgeübten Kraft. Die Bewegung des Teils 24 ist dabei nicht exakt linear, da eine gewisse Schwenkbewegung überlagert ist. Die Kinematik ähnelt sehr stark einer Parallelogrammführung.

Wie bereits erwähnt, umfassen Piezoaktuatoren mit Amplituden im Millimeterbereich eine Vielzahl von Piezoelementen in geometrischer Reihenschaltung. Es kann sich durchaus um mehrere Hundert solcher Piezoelemente handeln. Da handelsübliche Piezoelemente im Querschnitt begrenzt sind, z.B. auf Münzgröße, kann es zur Erzielung großer Kräfte erforderlich sein, mehrere "Säulen" von in Reihe geschalteten Piezoelementen parallel anzuordnen und in einem z.B. rohrförmigen Aktuator zusammenzufassen. Figur 6 zeigt stark vereinfacht auf einer statischen Basis 26 zwei parallel angeordnete "Säulen". Die beiden Säulen führen zu einem beweglichen Joch 27, das die gleiche Bewegungsamplitude wie jede der Säulen aufweist bei doppelter Druckkraft gegenüber einer einzelnen Säule. Selbstverständlich können auch mehr als zwei parallelgeschalteter "Säulen" in einem Aktuator zusammengefasst sein. Die geometrisch/konstruktive Reihen- bzw. Parallelschaltung darf nicht mit der elektrischen Schaltung der Piezoelemente verwechselt werden, wobei auch elektrisch Reihen- und Parallelschaltungen verwendet werden, letztere insbesondere um Spannungen zu begrenzen.

## Patentansprüche

1. Reibschweißvorrichtung für das stoffschlüssige Verbinden von Bauteilen, insbesondere für das Verbinden von strömungstechnisch wirksamen Schaufeln mit scheiben- oder ringförmigen Schaufelträgern zur Herstellung und Instandsetzung von integral beschaufelten Rotorkomponenten für Turbomaschinen, mit einem eine definierte periodische Bewegung eines Bauteils und einer and diesem vorhandenen Schweißfläche relativ zu einem anderen, während des Schweißens statisch gehaltenen Bauteil und einer and diesem vorhandenen Schweißfläche mit Bewegungsrichtungen parallel zu den Schweißflächen erzeugenden Oszillator, mit einer die Schweißflächen mit definierter Kraft aufeinander drückenden Stauchvorrichtung und mit einer das bewegte Bauteil außerhalb der Schweißzone aufnehmenden Kassette, **dadurch gekennzeichnet, dass** der Oszillator (8, 9) zwei oder eine höhere gerade Anzahl an Piezoaktuatoren (12 bis 15, 17 bis 20) umfasst, welche paarweise zumindest annähernd auf einer Wirkungslinie liegen und unter Druckerzeugung durch piezoelektrische Längenänderung von gegenüberliegenden Seiten gegen die Kassette (11) vorspannbar und an ihren kassettenseitigen Enden zusammen mit der Kassette (11) und dem Bauteil (3) synchron oszillierend bewegbar sind.

2. Reibschweißvorrichtung nach Anspruch 1, **dadurch gekennzeichnet, dass** die Stauchvorrichtung (10) mindestens einen Piezoaktuator (16) umfasst, dessen piezoelektrisch bewegbares Ende mit der Kassette (11) zur Einleitung einer definierten Stauchkraft (Fs) senkrecht zu den Schweißflächen (5, 6) koppelbar ist.

3. Reibschweißvorrichtung nach Anspruch 1 oder 2, **dadurch gekennzeichnet, dass** zur Vergrößerung der relativ kleinen, linearen Bewegungen der Piezoaktuatoren (21) mechanische Getriebe, wie z.B. Hebelmechanismen, Blattfederanordnungen (22), Kurvengetriebe, Kulissensteuerungen oder ähnliches vorhanden sind mit der Möglichkeit, größere Bewegungen mit geraden und/oder gekrümmten Bahnen zu erzeugen.

4. Reibschweißvorrichtung nach einem der vorhergehenden Ansprüche, für das Verbinden von Schaufeln mit einem scheiben- oder ringförmigen Schaufelträger, **dadurch gekennzeichnet, dass** die Wirkungslinien der Piezoaktuatoren (12 bis 15) quer zur Längsmittelachse (X) des Schaufelträgers (4) verlaufen, dass ein Paar von Piezoaktuatoren (12, 13) auf einer Wirkungslinie axial vorderhalb der Schaufel (3) von gegenüberliegenden Seite am vorderen Ende der Kassette (11) angreift, und dass ein Paar von Piezoaktuatoren (14, 15) auf einer Wirkungslinie axial hinterhalb der Schaufel (3) von gegenüberliegenden Seiten am hinteren Ende der Kassette (11) angreift.

5. Reibschweißvorrichtung nach einem der Ansprüche 1 bis 3, für das Verbinden von Schaufeln mit einem scheiben- oder ringförmigen Schaufelträger, **dadurch gekennzeichnet, dass** die Wirkungslinien der Piezoaktuatoren (17 bis 20) quer zur Längsmittelachse (X) des Schaufelträgers (4) verlaufen, dass zwei Paare von jeweils auf einer Wirkungslinie liegenden Piezoaktuatoren (17, 19) in unterschiedlicher radialer Höhe (H1, H2) relativ zur Längsmittelachse (X) des Schaufelträgers (4) axial vorderhalb der Schaufel (3) von gegenüberliegenden Seiten am vorderen Ende der Kassette (11) angreifen, und dass zwei Paare von jeweils auf einer Wirkungslinie liegenden Piezoaktuatoren (18, 20) in unterschiedlicher radialer Höhe (H1, H2) relativ zur Längsmittelachse (X) des Schaufelträgers (4) axial hinterhalb der Schaufel (3) von gegenüberliegenden Seiten am hinteren Ende der Kassette (11) angreifen.

6. Reibschweißvorrichtung nach Anspruch 4 oder 5, **dadurch gekennzeichnet, dass** das mindestens eine, am axial vorderen Ende der Kassette (11) angreifende Paar von Piezoaktuatoren (12, 13, 17, 19) in Relation zu dem mindestens einen, am axial hinteren Ende der Kassette (11) angreifenden Paar von Piezoaktuatoren (14, 15, 18, 20) mit gleicher Frequenz, mit gleicher oder verschiedener Amplitude sowie phasengleich oder phasenverschoben bewegbar ist.

7. Reibschweißvorrichtung nach Anspruch 5 oder 6, **dadurch gekennzeichnet, dass** die geometrischen Nullpunkte der Oszillationsbewegungen der beiden in der Höhe (H1, H2) versetzten, am axial vorderen Ende der Kassette (11) angreifenden Paare von Piezoaktuatoren (17, 19) relativ zueinander verschiebbar sind, ebenso wie die geometrischen Nullpunkte der Oszillationsbewegungen der beiden in der Höhe (H1, H2) versetzten, am axial hinteren Ende der Kassette (11) angreifenden Paare von Piezoaktüatoren (18, 20).

8. Reibschweißvorrichtung nach einem der vorhergehenden Ansprüche, **dadurch gekennzeichnet, dass** das Kraft-/Wegverhalten der Piezoaktuatoren (12 bis 21) durch geometrische Reihen- und Parallelschaltung von Piezoelementen (23) gewählt ist.

9. Reibschweißvorrichtung nach einem der vorhergehenden Ansprüche, **dadurch gekennzeichnet, dass** der maximale elektrische Spannungsbedarf der Piezoaktuatoren (12 bis 21) durch elektrische Reihen- und Parallelschaltung der Piezoelemente (23) begrenzt ist.

## Claims

1. A friction welding device for the substance-locking connection of component parts, in particular for the connection of blades for fluid-technological operation to disc-shaped or annular blade carriers for the production and corrective maintenance of integrally bladed rotor components for turbo-engines, having an oscillator that generates a defined periodic movement of one component part and a welding surface present on the latter relative to another component part that is kept static during the welding and a welding surface present on the latter, with directions of movement parallel to the welding surfaces, having a compressing device that presses the welding surfaces onto each other with defined force and having a cassette that takes up the moving component part outside the welding zone, **characterised in that** the oscillator (8, 9) comprises two or a higher even number of piezoactuators (12 to 15, 17 to 20) that lie in pairs at least approximately on a line of action and can be prestressed against the cassette (11) whilst generating pressure by means of piezoelectric change of length of opposing sides and can be moved so that they oscillate synchronously at their ends on the cassette side together with the cassette (11) and the component part (3).

2. Friction welding device according to claim 1, **characterised in that** the compressing device (10) comprises at least one piezoactuator (16), whose piezoelectrically movable end can be coupled to the cassette (11) in order to introduce a defined compressive force (Fs) perpendicular to the welding surfaces (5, 6).

3. Friction welding device according to claim 1 or 2, **characterised in that** in order to enlarge the relatively small, linear movements of the piezoactuators (21) mechanical gear units, such as, for example, lever mechanisms, leaf-spring arrangements (22), cam gears, link controls or similar, are provided, with the possibility of generating greater movements with straight and/or curved paths.

4. Friction welding device according to one of the preceding claims, for the connection of blades to a disc-shaped or annular blade carrier, **characterised in that** the lines of action of the piezoactuators (12 to 15) extend transversely to the longitudinal central axis (X) of the blade carrier (4), **in that** a pair of piezoactuators (12, 13) act on a line of action axially in front of the blade (3) from opposing sides at the front end of the cassette (11), and **in that** a pair of piezoactuators (14, 15) act on a line of action axially behind the blade (3) from opposing sides at the rear end of the cassette (11).

5. Friction welding device according to one of claims 1 to 3, for the connection of blades to a disc-shaped or annular blade carrier, **characterised in that** the lines of action of the piezoactuators (17 to 20) extend transversely to the longitudinal central axis (X) of the blade carrier (4), **in that** two pairs of piezoactuators (17, 19) each lying on a line of action act at a different radial height (H1, H2) relative to the longitudinal central axis (X) of the blade carrier (4) axially in front of the blade (3) from opposing sides at the front end of the cassette (11), and **in that** two pairs of piezoactuators (18, 20) each lying on a line of action act at a different radial height (H1, H2) relative to the longitudinal central axis (X) of the blade carrier (4) axially behind the blade (3) from opposing sides at the rear end of the cassette (11).

6. Friction welding device according to claim 4 or 5, **characterised in that** the at least one pair of piezoactuators (12, 13, 17, 19), acting at the axially front end of the cassette (11), can be moved in relation to the at least one pair of piezoactuators (14, 15, 18, 20), acting at the axially rear end of the cassette (11), with the same frequency, with the same or different amplitude and also in phase or out of phase.

7. Friction welding device according to claim 5 or 6, **characterised in that** the geometric zero points of the oscillatory movements of the two pairs of piezoactuators (17, 19) that are staggered in terms of height (H1, H2) and act at the axially front end of the cassette (11) can be displaced in relation to each other, in the same way as the geometric zero points of the oscillatory movements of the two pairs of piezoactuators (18, 20) that are staggered in terms of height (H1, H2) and act at the axially rear end of the cassette (11).

8. Friction welding device according to one of the preceding claims, **characterised in that** the force/path behaviour of the piezoactuators (12 to 21) is selected by geometric series and parallel connection of piezoelements (23).

9. Friction welding device according to one of the preceding claims, **characterised in that** the maximum electrical voltage requirement of the piezoactuators (12 to 21) is limited by electrical series and parallel connection of the piezoelements (23).

## Revendications

1. Dispositif de soudage par friction pour l'assemblage à adhésion par matière de composants, en particulier pour l'assemblage d'ailettes efficaces au niveau de l'écoulement avec des supports d'ailettes en forme de disque ou de bague pour la fabrication et la remise en état de composants de rotor ailetés intégralement pour des turbomachines, avec un oscillateur générant un déplacement périodique défini d'un composant et d'une surface de soudage présente sur ce composant par rapport à un autre composant maintenu de façon statique pendant le soudage et une surface de soudage présente sur ce composant avec des sens de déplacement parallèles aux surfaces de soudage, avec un dispositif de refoulement appuyant les surfaces de soudage avec une force définie les unes sur les autres et avec une cassette recevant le composant déplacé à l'extérieur de la zone de soudage, **caractérisé en ce que** l'oscillateur (8, 9) comprend deux ou un nombre pair supérieur d'actionneurs piézo-électriques (12 à 15, 17 à 20), qui se situent par paires au moins approximativement sur une ligne d'action, peuvent être pré-tendus contre la cassette (11) avec la production de pression par variation en longueur piézo-électrique de côtés opposés et peuvent être déplacés par leurs extrémités côté cassette en même temps que la cassette (11) et le composant (3) avec une oscillation synchrone.

2. Dispositif de soudage par friction selon la revendication 1, **caractérisé en ce que** le dispositif de refoulement (10) comprend au moins un actionneur piézo-électrique (16), dont l'extrémité mobile de façon piézo-électrique peut être couplée avec la cassette (11) pour l'introduction d'une force de refoulement (Fs) définie perpendiculairement aux surfaces de soudage (5, 6).

3. Dispositif de soudage par friction selon la revendication 1 ou 2, **caractérisé en ce que**, pour l'agrandissement des déplacements linéaires, relativement petits, des actionneurs piézo-électriques (21), des entraînements mécaniques, comme par exemple des mécanismes à levier, des dispositifs de ressort à lame (22), des entraînements à came, des commandes à coulisse ou similaires sont présents, avec la possibilité de générer des déplacements plus grands avec des trajectoires droites et/ou incurvées.

4. Dispositif de soudage à friction selon l'une des revendications précédentes, pour l'assemblage d'ailettes avec un support d'ailette en forme de disque ou de bague, **caractérisé en ce que** les lignes d'action des actionneurs piézo-électriques (12 à 15) sont disposées transversalement à l'axe médian longitudinal (X) du support d'ailette (4), **en ce qu'**une paire d'actionneurs piézo-électriques (12, 13) s'applique sur la ligne d'action axialement en avant de l'ailette (3) de côtés opposés sur l'extrémité avant de la cassette (11), et **en ce qu'**une paire d'actionneurs piézo-électriques (14, 15) s'applique sur une ligne d'action axialement en arrière de l'ailette (3) de côtés opposés sur l'extrémité arrière de la cassette (11).

5. Dispositif de soudage par friction selon l'une des revendications 1 à 3, pour l'assemblage d'ailettes avec un support d'ailette en forme de disque ou de bague, **caractérisé en ce que** les lignes d'action des actionneurs piézo-électriques (17 à 20) sont agencées transversalement à l'axe médian longitudinal (X) du support d'ailette (4), **en ce que** deux paires d'actionneurs piézo-électriques (17, 19) situées respectivement sur une ligne d'action sont appliquées à une hauteur (H1, H2) radiale différente par rapport à l'axe médian longitudinal (X) du support d'ailette (4) axialement en avant de l'ailette (3) de côtés opposés sur l'extrémité avant de la cassette (11) et **en ce que** deux paires d'actionneurs piézo-électriques (18, 20) respectivement situés sur une ligne d'action s'appliquent à une hauteur (H1, H2) radiale différente par rapport à l'axe médian longitudinal (X) du support d'ailette (4) axialement en arrière de l'ailette (3) de côtés opposés sur l'extrémité arrière de la cassette (11).

6. Dispositif de soudage par friction selon la revendication 4 ou 5, **caractérisé en ce que** la au moins une paire d'actionneurs piézo-électriques (12, 13, 17, 19), s'appliquant sur l'extrémité avant axialement de la cassette (11), peut être déplacée par rapport à la au moins une paire d'actionneurs piézo-électriques (14, 15, 18, 20) s'appliquant sur l'extrémité arrière axialement de la cassette (11) avec une fréquence identique, une amplitude identique ou différente et en phase ou de façon déphasée.

7. Dispositif de soudage par friction selon la revendication 5 ou 6, **caractérisé en ce que** les points zéro géométriques des mouvements d'oscillation des deux paires d'actionneurs piézo-électriques (17, 19), décalées dans la hauteur (H1, H2) et s'appliquant sur l'extrémité avant axialement de la cassette (11), peuvent être déplacés l'un par rapport à l'autre, de la même façon que les points zéro géométriques des mouvements d'oscillation des deux paires d'actionneurs piézo-électriques (18, 20) décalées dans la hauteur (H1, H2) et s'appliquant sur l'extrémité arrière axialement de la cassette (11).

8. Dispositif de soudage par friction selon l'une quelconque des revendications précédentes, **caractérisé en ce que** le comportement force/course des actionneurs piézo-électriques (12 à 21) est choisi par le montage en série et le montage en parallèle géométriques d'éléments piézo-électriques (23).

9. Dispositif de soudage par friction selon l'une quelconque des revendications précédentes, **caractérisé en ce que** les besoins en tension électrique maximum des actionneurs piézo-électriques (12 à 21) sont limités par le montage en série et le montage en parallèle électriques des éléments piézo-électriques (23).
